# EUROPÄISCHE PATENTANMELDUNG

(11) **EP 3 416 144 A1**
(43) Veröffentlichungstag der Anmeldung: **19.12.2018**
(21) Anmeldenummer: 17175620.8
(22) Anmeldetag: 13.06.2017
(51) Int. Cl.: G08B 17/113

(54) **GEHÄUSE ZUR AUFNAHME EINES ELEKTRONISCHEN MODULS UND EINES AUSTAUSCHBAREN ENERGIESPEICHERS SOWIE WERKZEUG ZUM ENTRIEGELN, AUFSCHWENKEN UND VERSCHLIESSEN DES GEHÄUSES**

(71) Anmelder: Siemens Schweiz AG, 8047 Zürich (CH)
(72) Erfinder: Konrad, Hilmar, 6340 Baar (CH)
(74) Vertreter: Maier, Daniel Oliver

(57) **Zusammenfassung**

Die Erfindung betrifft ein Gehäuse (1) mit einem Aufnahmeraum (AR) zur Aufnahme eines elektronischen Moduls, insbesondere eines Funkmoduls (6), sowie eines zur Stromversorgung damit verbundenen Energiespeichers (4), wobei das Gehäuse einen Grundkörper (21) sowie ein relativ dazu beweglich angebrachtes Verschlussteil (22, 26) aufweist. Der Grundkörper ist zur lösbaren Anbringung an einer Montagefläche (MF) ausgebildet. Das Verschlussteil ist zum Verschliessen des Aufnahmeraums vorgesehen und derart ausgebildet, dass es im geöffneten Zustand eine Zugangsöffnung (OP) zu dem Aufnahmeraum freigibt, um ein Entnehmen des Energiespeichers und ein Einsetzen eines zum Austausch vorgesehenen Energiespeichers über die Zugangsöffnung zu ermöglichen. Das Gehäuse weist eine Haltevorrichtung (H) zum lösbaren Anbringen des Energiespeichers an der Haltevorrichtung auf. Die Haltevorrichtung ist derart ausgebildet, dass der Energiespeicher in einer Richtung (R1) weg von der Montagefläche von der Haltevorrichtung entnehmbar und in einer Gegenrichtung (R2) hin zur Montagefläche an der Haltevorrichtung anbringbar ist. Die Erfindung betrifft zudem ein erstes und zweites Werkzeug (11, 12) zum Entriegeln, Aufschwenken und Verschliessen des Gehäuses sowie für einen Austausch des Energiespeichers.

## Beschreibung

### BESCHREIBUNGSEINLEITUNG

Die Erfindung betrifft ein Gehäuse mit einem im Gehäuseinneren ausgeformten Aufnahmeraum zur Aufnahme eines elektronischen Moduls, insbesondere eines Funkmoduls, sowie eines zur Stromversorgung damit verbundenen Energiespeichers. Das Gehäuse weist einen Grundkörper auf, der zur insbesondere lösbaren Anbringung an einer Montagefläche ausgebildet ist. Die Montagefläche ist typischerweise eine Decke in einem Raum eines Gebäudes oder in einer Halle. Die Montagefläche kann alternativ eine Wand sein.

Des Weiteren betrifft die Erfindung ein erstes Werkzeug zum Entriegeln, Aufschwenken und Verschliessen des erfindungsgemässen Gehäuses. Schliesslich betrifft die Erfindung ein zweites Werkzeug zum Entnehmen eines im Gehäuse aufgenommenen Energiespeichers und zum Einsetzen eines zum Austausch vorgesehenen Energiespeichers in das Gehäuse.

### STAND DER TECHNIK

Gegenwärtige Positionssignalgeber - sogenannte "Indoor Positioning Beacons", wie z.B. der iBeacon der Fa. Apple Inc. - verfügen über eine Batterie (Primärzelle) zur Stromversorgung. Die Batterie muss in Abhängigkeit vom Datenverkehr und von der Batteriekapazität alle ein bis zwei Jahre ausgetauscht werden. Derartige Positionssignalgeber werden typischerweise an der Decke eines Gebäudes montiert. Sie basieren überwiegend auf dem Bluetooth Low Energy-Standard (BT LE).

Aus der Internationalen Veröffentlichung WO 2016/020116 A1 ist ein Meldersockel zur Befestigung an einer Montagefläche bekannt. Er weist einen elektrischen Anschluss zum Anschliessen an einer Melderlinie einer Gefahrenmeldeanlage sowie eine erste Anschlussseite zur lösbaren Anbringung eines Gefahrenmelders auf. Die erste Anschlussseite ist elektrisch und konstruktiv auf eine zweite Anschlussseite eines derartigen Gefahrenmelders abgestimmt, sodass dieser am Meldersockel lösbar anbringbar und über diesen mittelbar an die Melderlinie anschliessbar ist. Der Meldersockel weist eine im Meldersockel aufgenommene Funkeinrichtung als elektronisches Modul zum Aussenden von Positionsdaten des Montageorts des Meldersockels und/oder eines Verweises darauf auf. Die Funkeinrichtung wird dabei über die Melderlinie gespeist. Die Stromversorgung des Gefahrenmelders sowie der Funkeinrichtung kann zusätzlich durch einen Kondensator, Akkumulator oder durch eine Batterie gepuffert sein.

Jedoch ist die Stromversorgung der Funkeinrichtung über die Melderlinie zulassungsrelevant. Eine Zulassung ist langwierig und aufwändig. Es ist daher günstiger, die Funkeinrichtung ausschliesslich über eine eigene Batterie zu versorgen.

Allerdings muss auch hier die Batterie, wie beim eingangs genannten Stand der Technik, regelmässig ausgetauscht werden.

Bekannt ist weiter aus dem Stand der Technik, dass Gefahrenmelder, wie z.B. Brandmelder, mittels eines sogenannten Prüfpflückers getestet und gegebenenfalls vom Meldersockel gelöst und ausgetauscht werden können. Allerdings muss für diesen Fall eine übergeordnete Gefahrenmeldezentrale bzw. Brandmeldezentrale (BMZ) ausgeschaltet bzw. in einen Servicemodus geschaltet werden und zudem ein Servicemann bereitgestellt werden, da bei der Entfernung eines Brandmelders vom Meldersockel eine entsprechende Meldung vom Brandmelder an die Brandmeldezentrale ausgegeben wird.

Ein Austausch der Batterie im Meldersockel wie auch generell in einem Gehäuse an der Decke ist daher aufwändig und mit dem Einsatz von zusätzlichem Personal verbunden.

Es ist somit eine Aufgabe der vorliegenden Erfindung, ein Gehäuse anzugeben, bei dem ein Energiespeicher für ein elektronisches Modul im Gehäuse, insbesondere eine Batterie, auf besonders einfache Weise ausgetauscht werden kann.

Es ist eine weitere Aufgabe der Erfindung, ein Gehäuse mit einer Anschlussbasis im Sinne eines Meldersockels mit einem daran lösbar angebrachten Gefahrenmelder anzugeben, bei dem ein Energiespeicher für ein elektronisches Modul im Gehäuse, insbesondere eine Batterie, auf einfache Weise im laufenden Betrieb der Gefahrenmeldeanlage ausgetauscht werden kann.

Es ist eine schliesslich eine Aufgabe der Erfindung, ein geeignetes erstes und zweites Werkzeug dafür anzugeben.

### LÖSUNG DER AUFGABE

Die Aufgabe der Erfindung wird hinsichtlich des Gehäuses durch die Merkmale des unabhängigen Patentanspruchs 1 und hinsichtlich des ersten und zweiten Werkzeugs durch die Merkmale der Patentansprüche 14 und 15 gelöst.

Vorteile und Ausgestaltungen der Erfindung, die einzeln oder in Kombination miteinander einsetzbar sind, sind Gegenstand der abhängigen Ansprüche.

### BESCHREIBUNG DER ERFINDUNG

Erfindungsgemäss weist das Gehäuse einen Grundkörper sowie ein relativ dazu beweglich angebrachtes Verschlussteil auf. Der Grundkörper ist zur insbesondere lösbaren Anbringung an einer Montagefläche, insbesondere an einer Decke, ausgebildet. Das Verschlussteil ist zum Verschliessen des Aufnahmeraums vorgesehen und derart ausgebildet, dass es im geöffneten Zustand eine Zugangsöffnung zu dem Aufnahmeraum freigibt, um ein Entnehmen des Energiespeichers und ein Einsetzen eines zum Austausch vorgesehenen Energiespeichers über die Zugangsöffnung zu ermöglichen. Das Gehäuse weist eine Haltevorrichtung zum lösbaren Anbringen des Energiespeichers an der Haltevorrichtung auf. Die Haltevorrichtung ist derart ausgebildet, dass der Energiespeicher in einer Richtung weg von der Montagefläche von der Haltevorrichtung entnehmbar und in einer Gegenrichtung hin zur Montagefläche an der Haltevorrichtung anbringbar ist.

Der Vorteil der Erfindung besteht darin, dass der Energiespeicher im Gehäuse auf besonders einfache Weise mittels eines Werkzeugs und in einem Abstand vom Gehäuse bis zu mehreren Metern zum Gehäuse ausgetauscht werden kann.

Erreicht wird dies durch das Entfernen und Wiederanbringen des Energiespeichers weg von der Montagefläche, insbesondere weg von der Decke, und in der Gegenrichtung hin zur Decke.

Das erfindungsgemässe Gehäuse ist vorzugsweise lösbar an einer Montageplatte angebracht, wie z.B. mittels eines Bajonettverschlusses oder eines Magneten. Die Montageplatte ist ihrerseits fest an der Decke oder der Wand als Montagefläche angebracht. Das Verschlussteil zum Verschliessen des Aufnahmeraums kann auch als Gehäusedeckel bezeichnet werden.

Der Energiespeicher kann eine Batterie (Primärzelle) oder ein Akkumulator (Sekundärzelle) sein.

Das elektronische Modul kann z.B. eine Sensoreinheit zur Erfassung einer Umgebungsgrösse im Bereich des Gehäuses sein. Die Sensoreinheit kann z.B. ein Temperatursensor, ein Feuchtigkeitssensor, ein Gassensor, insbesondere ein CO-Sensor oder CO2-Sensor, ein Luftdrucksensor oder ein Helligkeitssensor sein. Die erfassten Sensorwerte können in einem nichtflüchtigen elektronischen Speicher, wie z.B. auf einer SD-Speicherkarte, der Sensoreinheit vorzugsweise zyklisch gespeichert werden. Die gespeicherten Sensorwerte können später ausgelesen werden, in dem das Gehäuse abgenommen wird oder in dem die Sensoreinheit aus dem Aufnahmeraum entnommen wird. Das elektronische Modul kann alternativ oder zusätzlich ein Aktor sein, wie z.B. eine LED für Dauerlicht oder Blitzlicht, oder ein Lautsprecher, ein Piepser oder eine Hupe.

Vorzugsweise ist das elektronische Modul ein Funkmodul. Es kann z.B. auf einem WLAN-, Bluetooth- (BT LE), 6LoWPAN- oder GSM-Standard basieren. Das Funkmodul kann dazu eingerichtet sein, die zuvor erfassten Sensorwerte oder Positionsdaten, wie z.B. GPS-Daten für ein Indoor-Positionsbestimmungs-/ Navigationssystem in einem Gebäude drahtlos auszugeben.

Nach einer Ausführungsform ist das relativ zum Grundkörper beweglich angebrachte Verschlussteil über ein Gelenk mit dem Grundkörper verbunden, sodass das Verschlussteil um eine parallel oder senkrecht zur Montagefläche verlaufende Schwenkachse des Gelenks schwenkbar ist, um die Zugangsöffnung zu dem Aufnahmeraum freizugeben.

Einer weiteren Ausführungsform zufolge ist das relativ zum Grundkörper des Gehäuses beweglich angebrachte Verschlussteil eine im Grundkörper parallel zur Montagefläche verschiebbar angeordnete Schublade. Die Schublade weist eine Schubplatte mit einem Frontteil auf, wobei das Frontteil den Grundkörper im eingeschobenen Zustand der Schublade verschliesst und wobei das Frontteil die Zugangsöffnung zum Aufnahmeraum im ausgefahrenen Zustand freigibt. Die Schubplatte weist die Haltevorrichtung auf, wobei die Haltevorrichtung zur lösbaren Anbringung des Energiespeichers im ausgefahrenen Zustand der Schublade eingerichtet ist. Die Schublade ist in ihrer Bauhöhe derart bemessen, dass der zum Austausch an der Schubplatte angebrachte Energiespeicher in den Grundkörper des Gehäuses eingeschoben werden kann.

Im Besonderen bildet der Grundkörper nach einer weiteren Ausführungsform an seinem der Montagefläche gegenüberliegenden Ende eine Anschlussbasis zur Anbringung eines elektrischen Geräts aus. Die Anschlussbasis ist integraler Teil des Grundkörpers. Alternativ dazu kann die Anschlussbasis das beweglich am Grundkörper angebrachte Verschlussteil sein.

Nach einer bevorzugten Ausführungsform bildet der Grundkörper an seinem der Montagefläche gegenüberliegenden Ende eine Anschlussbasis zur lösbaren Anbringung eines Gefahrenmelders im Sinne eines Meldersockels aus. Der Gefahrenmelder ist insbesondere ein Brandmelder oder optischer und/oder akustischer Alarmgeber.

Insbesondere weist die Anschlussbasis ein mechanisches Betätigungsmittel auf, welches derart ausgestaltet ist, dass es einen Überwachungskontakt eines an der Anschlussbasis lösbar aufgenommenen Gefahrenmelders nur dann betätigt, wenn dieser in einer für den ordnungsgemässen Betrieb des Gefahrenmelders vorgesehenen Endstellung aufgenommen ist.

Nach einer besonders vorteilhaften Ausführungsform weist das Gehäuse einen elektrischen Anschluss zum Anschliessen des Gehäuses an einer Melderleitung auf. Die Anschlussbasis weist erste elektrische Kontakte auf, die über eine im Gehäuse angeordnete, insbesondere flexible Verbindungsleitung mit dem elektrischen Anschluss verbunden sind. Die ersten elektrischen Kontakte sind derart angeordnet, dass diese mit ersten elektrischen Gegenkontakten eines an der Anschlussbasis aufgenommenen elektrischen Geräts, insbesondere mit ersten elektrischen Gegenkontakten eines lösbar aufgenommenen Gefahrenmelders, kontaktieren.

Der besondere Vorteil ist, dass der Gefahrenmelder für einen Batteriewechsel nicht vom Gehäuse abgenommen werden muss. Der Gefahrenmelder bleibt operativ im Einsatz. Eine sonst beim Entfernen des Gefahrenmelders ausgegebene oder durch die Gefahrenmeldeanlage generierte Fehlermeldung bleibt aus. Zusätzliches Personal zum Schalten der Gefahrenmeldeanlage in einen Testbetrieb ist hier vorteilhaft nicht erforderlich.

Nach einer zur vorherigen Ausführungsform alternativen Ausführungsform weist die im Grundkörper ausgebildete Anschlussbasis erste elektrische Kontakte auf, welche derart angeordnet sind, dass diese mit ersten elektrischen Gegenkontakten eines an der Anschlussbasis lösbar aufgenommenen Gefahrenmelders kontaktieren. Der Grundkörper ist zur lösbaren Anbringung des Gehäuses an einem Meldersockel als Montagefläche ausgebildet. Der Meldersockel ist zur Befestigung insbesondere an einer Decke ausgebildet sowie zum Anschliessen an eine Melderleitung vorgesehen und weist zweite elektrische Kontakte auf. Der Grundkörper weist zweite elektrische Gegenkontakte auf, welche derart angeordnet sind, dass diese mit den zweiten elektrischen Kontakten nach lösbarer Anbringung des Gehäuses am Anschlusssockel kontaktieren.

Der besondere Vorteil bei dieser Ausführungsform liegt darin, dass das Gehäuse wie bei einem Sandwich als Zwischenbasis nachträglich zwischen einem bestehenden Meldersockel und einem bereits daran angebrachten Gefahrenmelder angebracht werden kann. Nach dem Zwischenschalten wird der Gefahrenmelder wie gehabt weiter an der Melderlinie betrieben.

Einer weiteren Ausführungsform zufolge bilden der Energiespeicher sowie elektronische Modul eine gemeinsame Baueinheit zum Einsetzen sowie zum Austausch über die Zugangsöffnung. Der Energiespeicher ist zur elektrischen Versorgung des elektronischen Moduls elektrisch mit diesem verbunden.

Nach einer weiteren Ausführungsform umfasst das Verschlussteil einen bewegbaren Riegel, der mit einem feststehenden Gegenstück des Grundkörpers derart mechanisch zusammenwirkt, dass das Verschlussteil mit dem Verschliessen des Aufnahmeraums mit dem Grundkörper verriegelt.

Alternativ dazu umfasst der Grundkörper einen bewegbaren Riegel, der mit einem feststehenden Gegenstück des Verschlussteils derart mechanisch zusammenwirkt, dass das Verschlussteil mit dem Verschliessen des Aufnahmeraums mit dem Grundkörper verriegelt.

Insbesondere weist das Verschlussteil eine derart an seiner Aussenseite ausgestaltete Entriegelungsöffnung auf, dass ein geometrisch darauf abgestimmtes Entriegelungswerkzeug insbesondere in einer Richtung hin zur Montagefläche in die Entriegelungsöffnung einführbar ist, um das Verschlussteil mit dem verriegelten Grundkörper zum Wiederöffnen des Aufnahmeraums zu entriegeln.

Nach einer Ausführungsform dazu ist das relativ zum Grundkörper beweglich angebrachte Verschlussteil über ein Gelenk mit dem Grundkörper verbunden, sodass das Verschlussteil um eine Drehachse senkrecht zur Montagefläche schwenkbar ist, um die Zugangsöffnung zu dem Aufnahmeraum freizugeben. Das Verschlussteil weist eine derart an seiner Aussenseite ausgestaltete, mit der Drehachse fluchtende Einführöffnung als Schwenklager auf, dass ein geometrisch darauf abgestimmtes Aufschwenkwerkzeug insbesondere in einer Richtung hin zur Montagefläche in die Einführöffnung einführbar ist.

Insbesondere weist der Grundkörper einen tangentialen Anschlag auf, an dem das Verschlussteil im verschlossenen Zustand des Aufnahmeraums anliegt. Das Verschlussteil verriegelt bei Erreichen des tangentialen Anschlags und insbesondere nach Entfernen des Entriegelungswerkzeugs wieder selbsttätig mit dem Grundkörper.

Die Aufgabe der Erfindung wird weiterhin mit einem ersten Werkzeug zum Entriegeln, Aufschwenken und Verschliessen eines erfindungsgemässen Gehäuses entsprechend den beiden vorherigen Ausführungsformen gelöst.

Das erste Werkzeug weist eine vorzugsweise teleskopierbare Stange, eine an einem ersten Stangenende ausgebildete Entriegel- und Schwenkeinrichtung sowie einen an einem gegenüberliegenden zweiten Stangenenden ausgebildeten Haltebereich auf. Die Entriegel- und Schwenkeinrichtung weist ein erstes und zweites Ende mit einem dort ausgebildeten ersten und zweiten Zapfen auf. Die beiden Zapfen sind derart zueinander beabstandet und ausgestaltet, dass sie sowohl in eine Entriegelungsöffnung als auch in eine Einführöffnung eines an der Montagefläche aufgenommenen Gehäuses eingreifen. Es ist zwischen dem ersten und zweiten Stangenende eine Vorrichtung zum Einbringen eines Drehmoments auf die Stange für das Aufschwenken und Verschliessen des Gehäuses vorhanden.

Mittels des ersten Werkzeugs sind auf besonders einfache Weise ein Entriegeln der Anschlussbasis vom Grundkörper sowie ein Aufschwenken der Anschlussbasis möglich, um Zugang zum Aufnahmeraum im Inneren des Gehäuses für einen Batteriewechsel zu erhalten. Ebenso ist auf umgekehrtem Wege ein einfaches Verschliessen und selbsttätiges Verriegeln der Anschlussplatte mit dem Grundkörper möglich. Der Betrieb eines an der Anschlussplatte angebrachten Gefahrenmelders wird dabei in keinster Weise eingeschränkt.

Mittels des zweiten Werkzeugs sind auf besonders einfache Weise eine Entnahme des auszutauschenden erschöpften Energiespeichers sowie ein Einsetzen eines neuen Energiespeichers in das Gehäuse möglich.

Die Aufgabe der Erfindung wird weiterhin mit einem zweiten Werkzeug zum Entnehmen eines an einer Haltevorrichtung lösbar angebrachten Energiespeichers und zum Einsetzen eines zum Austausch vorgesehenen Energiespeichers über eine Zugangsöffnung eines im geöffneten Zustand an einer Montagefläche aufgenommenen Gehäuses gelöst. Das zweite Werkzeug weist eine vorzugsweise teleskopierbare Stange, einen an einem ersten Stangenende ausgebildeten Greifer sowie eine an einem gegenüberliegenden zweiten Stangenende ausgebildeten Haltebereich auf, wobei der Greifer vorzugsweise zum wahlweise Öffnen und Schliessen ausgebildet ist.

### FIGURENBESCHREIBUNG

Die Erfindung sowie vorteilhafte Ausführungen der vorliegenden Erfindung werden am Beispiel der nachfolgenden Figuren erläutert. Dabei zeigen:
- FIG 1: ein Beispiel für ein an der Decke angebrachtes Gehäuse mit einem aufschwenkbaren Verschlussteil zum Austausch eines Energiespeichers gemäss der Erfindung in einer Seitenansicht,
- FIG 2: das Beispiel gemäss FIG 1 im geöffneten Zustand,
- FIG 3: das Beispiel gemäss FIG 1 in einer Draufsicht auf das Gehäuse entlang der Blickrichtung III,
- FIG 4: ein an einer Melderlinie angeschlossenes Gehäuse mit einer zum Teil aufgeschwenkten Anschlussbasis mit einem daran angebrachten Gefahrenmelder,
- FIG 5: ein Gehäuse mit einer zum Teil aufgeschwenkten Anschlussbasis und mit einem daran angebrachten funkbasierten Gefahrenmelder gemäss der Erfindung,
- FIG 6: einen an der Melderlinie angeschlossenen Meldersockel mit einem daran angebrachten Gehäuse und mit einer zum Teil aufgeschwenkten Anschlussbasis mit einem daran angebrachten Gefahrenmelder,
- FIG 7: ein Gehäuse mit einer ausfahrbaren Schublade gemäss der Erfindung zur Aufnahme eines dort lösbar anbringbaren Energiespeichers,
- FIG 8: zeigt in einer Draufsicht ein weiteres Beispiel für ein Gehäuse mit einer Anschlussbasis, die um eine senkrecht zur Decke verlaufende Schwenkachse gemäss der Erfindung schwenkbar ist,
- FIG 9: ein Beispiel für einen Verriegelungs- und Entriegelungsmechanismus für ein Gehäuse gemäss der Erfindung,
- FIG 10: ein Beispiel für ein erstes Werkzeug gemäss der Erfindung zum Entriegeln, Aufschwenken und Verschliessen eines erfindungsgemässen Gehäuses, und
- FIG 11: ein Beispiel für ein zweites Werkzeug gemäss der Erfindung zum Entnehmen und zum Einsetzen eines an einer Haltevorrichtung eines erfindungsgemässen Gehäuses lösbar angebrachten Energiespeichers.

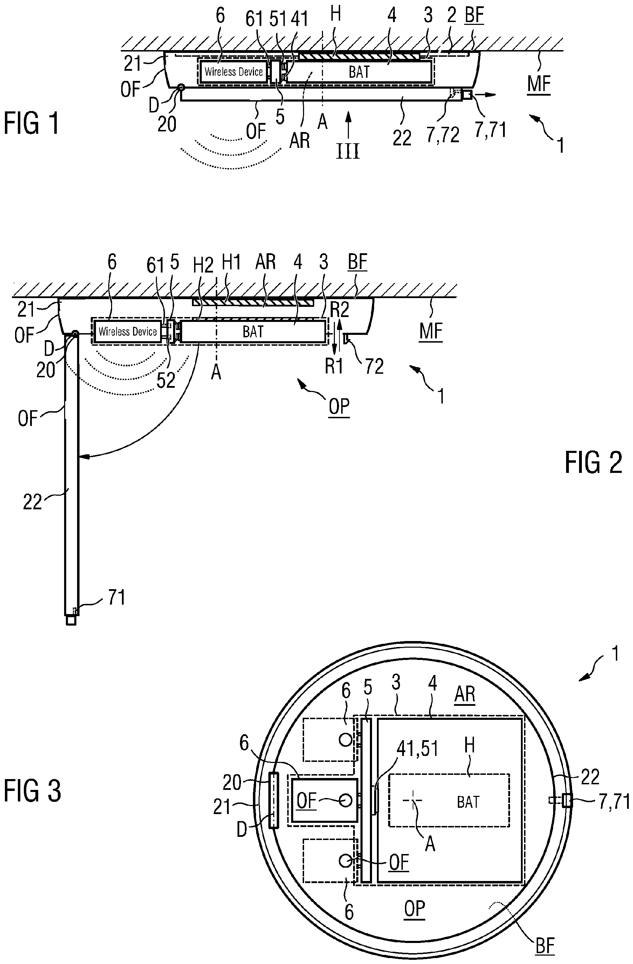

FIG 1 zeigt ein Beispiel für ein an der Decke MF angebrachtes Gehäuse 1 mit einem aufschwenkbaren Verschlussteil 22 zum Austausch eines Energiespeichers 4 gemäss der Erfindung. Das gezeigte Gehäuse 1 ist lösbar an einer Montageplatte 2 angebracht, die ihrerseits fest an der Decke MF als Montagefläche angebracht ist. Mit dem Bezugszeichen 21 ist ein Grundkörper und mit dem Bezugszeichen 22 ein Verschlussteil bezeichnet. Mit BF ist eine im Wesentlichen ebene Befestigungsfläche des Grundkörpers 21 bezeichnet, mit welcher der Grundkörper 21 an der Montagefläche MF angebracht werden kann. Die Befestigungsfläche BF kann auch als Befestigungsseite bezeichnet werden. Das gezeigte Gehäuse 1 ist im Wesentlichen rotationssymmetrisch um eine Symmetrieachse A ausgebildet.

Im Inneren des Gehäuses 1 ist ein Aufnahmeraum AR für eine Batterie 4 als Energiespeicher sowie für ein Funkmodul 6 ("Wireless Device") als elektronisches Modul ausgebildet. Das Funkmodul 6 kann dazu eingerichtet sein, eine Umgebungstemperatur, einen Feuchtigkeitswert und/oder einen CO₂-Konzentrationswert als typische Komfortgrössen in einem Gebäude zu erfassen und drahtlos auszugeben. Zur Erfassung der Komfortgrössen sind im Gehäuse 1 Eintrittsöffnungen OF zum Aufnahmeraum AR im Verschlussteil 22 vorhanden. Das Funkmodul 6 kann auch dazu eingerichtet sein, eine Positionsangabe zum Montageort des Gehäuses 1 im Gebäude drahtlos auszugeben. Die Positionsangabe kann eine GPS-Koordinate, eine relative Koordinate zu einem Bezugspunkt des Gebäudes oder ein Verweis darauf sein, wie z.B. ein Internet-Link (URL) auf eine zugeordnete Datenbank.

Das Gehäuse 1 zeigt im Aufnahmeraum AR ein Anschluss-/Kontaktierungselement 5 auf, welches Batteriegegenkontakte 51 zur möglichen Kontaktierung mit Batteriekontakten 41 am Energiespeicher 4 bzw. an der Batterie umfasst. Weiterhin weist das Anschluss-/Kontaktierungselement 5 einen elektrischen Anschluss 52 in Form von Buchsen auf, die mit Anschlusskontakten 61 des Funkmoduls 6 in Form von Anschlussstiften kontaktieren. Das Anschluss-/Kontaktierungselement 5 fungiert daher als Steckplatz zum elektrischen Anschluss eines Funkmoduls 6.

Je nach Ausführungsform kann das Anschluss-/Kontaktierungselement 5 fest im Aufnahmeraum AR angeordnet sein. Dadurch kann eine Batterie 4 in den Aufnahmeraum AR im Sinne eines Batteriefachs eingesetzt werden, wobei die Batteriekontakte 41 dann mit den Batteriegegenkontakten 51 kontaktieren.

Alternativ zur Kontaktierung der Batterie 4 mit Anschluss-/Kontaktierungselement 5 einerseits und zur Kontaktierung des Funkmoduls 6 mit dem Anschluss-/Kontaktierungselement 5 andererseits, kann die Batterie 4 und das Funkmodul 6 gemäss der Erfindung auch eine gemeinsame Baueinheit 3 zum Einsetzen sowie zum Austausch über die Zugangsöffnung OP bilden. Die Baueinheit 3 bildet somit eine autarke Einheit.

Erfindungsgemäss ist das Verschlussteil 22 zum Verschliessen des Aufnahmeraums AR vorgesehen und derart ausgebildet, dass es im geöffneten Zustand (siehe FIG 2) eine Zugangsöffnung OP zu dem Aufnahmeraum AR freigibt. Zum möglichen Verschliessen sind der Grundkörper 21 und das Verschlussteil 22 über ein Scharnier 20 miteinander verbunden. Das Scharnier 20 ermöglicht als Gelenk (ausschliesslich) Schwenkbewegungen um eine Schwenkachse D des Scharniers 20. Letzteres ist derart ausgebildet und ausgerichtet, dass die Schwenkachse D parallel zur Befestigungsfläche BF des Gehäuses 1 und somit parallel zur gegenüberliegenden Montagefläche MF verläuft. Durch ein Aufschwenken des Verschlussteils 22 bzw. Gehäusedeckels ist dann ein Entnehmen des Energiespeichers 4 und ein Einsetzen eines zum Austausch vorgesehenen Energiespeichers 4 über die Zugangsöffnung OP gemäss der Erfindung möglich.

Um ein ungewolltes Öffnen bzw. Aufschwenken des Verschlussteils 22 zu verhindern, umfasst das Verschlussteil 22 einen bewegbaren bzw. beweglichen Riegel 71, der mit einem feststehenden Gegenstück 72 am Grundkörper 21 derart mechanisch zusammenwirkt, dass das Verschlussteil 22 mit dem Verschliessen des Aufnahmeraums AR mit dem Grundkörper 21 verriegelt. Der Riegel 71 und das feststehende Gegenstück 72 bilden zusammen einen Verriegelungsmechanismus 7.

FIG 2 zeigt das Beispiel gemäss FIG 1 im geöffneten Zustand. Gemäss der Erfindung weist das Gehäuse 1 eine Haltevorrichtung H zum lösbaren Anbringen zumindest der Batterie 4 an der Haltevorrichtung H auf. Letztere ist derart ausgebildet, dass die Batterie 4 alleine oder, wie im Beispiel der FIG 2 gezeigt, zusammen mit dem Funkmodul 6, d.h. als Baueinheit 3, in einer Richtung R1 weg von der Montagefläche MF von der Haltevorrichtung H entnehmbar ist. Auf umgekehrtem Wege ist die gezeigte Baueinheit 3 oder die Batterie 4 alleine in einer Gegenrichtung R2 hin zur Montagefläche MF wieder an der Haltevorrichtung H anbringbar. So kann eine erschöpfte Batterie 4 wie auch ein erschöpfter Akkumulator 4 durch eine bau- oder typgleiche neue Einheit 4 ersetzt werden. Alternativ kann eine erschöpfte Batterie 4 auch durch einen aufgeladenen Akkumulator 4 ersetzt werden, wie z.B. durch einen Li-Ion-Akkumulator oder durch einen NiMH-Akkumulator mit geringer Selbstentladung, wie z.B. vom Typ Eneloop der Fa. Panasonic.

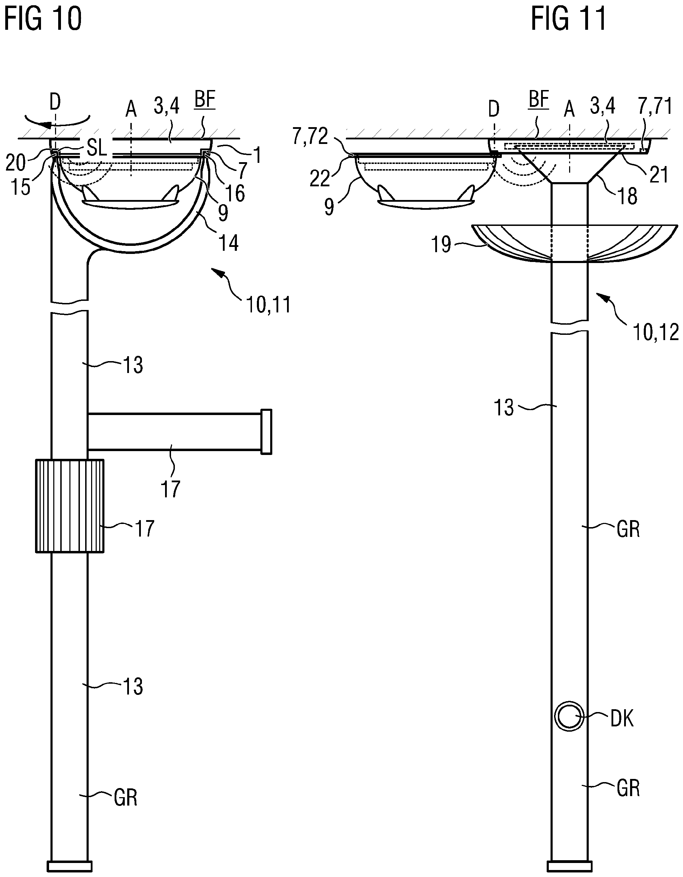

Die Haltevorrichtung H weist ein gehäuseseitiges Teil H1 sowie ein energiespeicherseitiges Teil H2 auf. Das gehäuseseitiges Teil H1 kann z.B. ein Permanentmagnet sein, und das energiespeicherseitige Teil H2 ein weichmagnetisches Stück Blech. Die Haltvorrichtung H kann auch ein zweiteiliger Klettverschluss sein. Da Entnehmen der Batterie 4 von der Haltevorrichtung H kann manuell erfolgen oder mittels eines Werkzeugs, wie im Beispiel der FIG 11 gezeigt.

Die vorliegende FIG 2 zeigt ausserdem, wie das Verschlussteil 22 durch ein seitliches Herausziehen des Riegels 71 entriegelt (siehe FIG 1) und dann aufgeschwenkt werden kann (siehe FIG 2). Das am Grundkörper 21 angebrachte Gegenstück 72 zum Riegel 71 ist hier beispielhaft als Haken ausgebildet.

FIG 3 zeigt das Beispiel gemäss FIG 1 in einer Draufsicht auf das Gehäuse 1 entlang der Blickrichtung III. In dieser Darstellung ist besonders gut das Scharnier 20 zum Aufschwenken des Verschlussteils 22 zu sehen. Zu sehen ist auch die vergleichsweise grosse Batterie 4, deren Batteriekontakte 41 mit Batteriegegenkontakten 51 des Anschluss-/Kontaktierungselements 5 kontaktieren. Ist letzteres gehäusefest ausgebildet, so kann dieses, wie gezeigt, beispielhaft drei Steckplätze bereitstellen. Es können somit maximal drei Sensoreinheiten, Aktoren oder Funkmodule oder in Kombination als elektronische Module 6 an dem Anschluss-/Kontaktierungselement 5 angebracht und jeweils elektrisch über dieses versorgt werden.

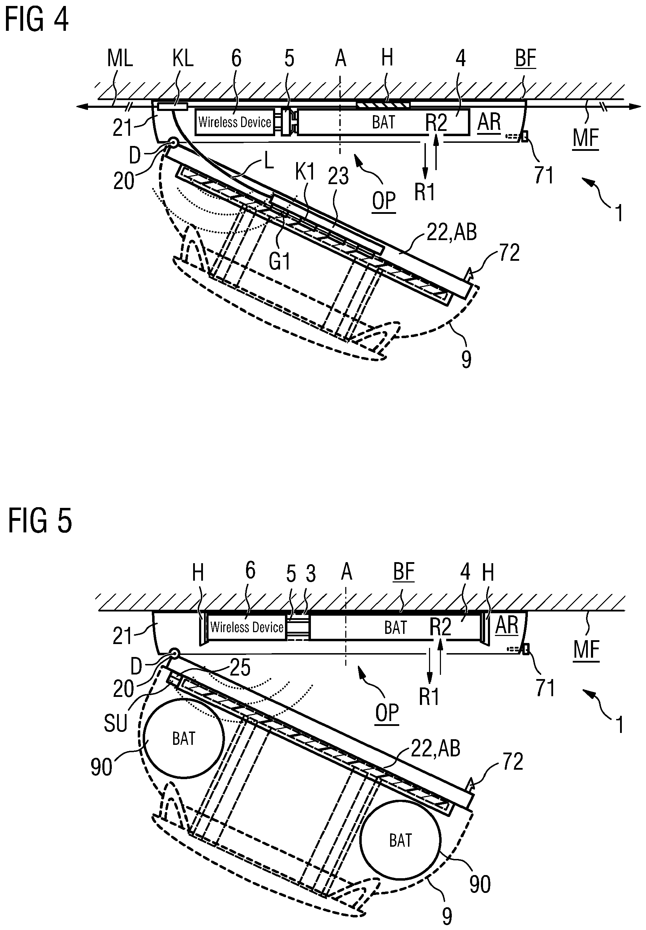

FIG 4 zeigt ein an einer Melderlinie ML angeschlossenes Gehäuse 1 mit einer zum Teil aufgeschwenkten Anschlussbasis AB als Verschlussteil 22 und mit einem daran angebrachten Gefahrenmelder 9. Im Unterschied zu den vorherigen Ausführungsformen ist im Gehäuse 1 eine Anschlussklemme KL vorhanden, um das Gehäuse 1 im Sinne eines Meldersockels an einer Melderlinie ML einer Gefahrenmeldeanlage anzuschliessen. Die Anschlussbasis AB ist zur lösbaren Aufnahme des Gefahrenmelders 9 ausgebildet. Sie weist auf der dem Gefahrenmelder 9 zugewandten Seite erste elektrische Kontakte K1 auf, die mit ersten elektrischen Gegenkontakten G1 des Gefahrenmelders 9 nach ordnungsgemässer Anbringung an der Anschlussbasis AB kontaktieren. Die ersten elektrischen Kontakte K1 sind auf einer Leiterpatte 23 im oder an der Anschlussbasis AB angeordnet. Über eine durchgeschleifte flexible Leitung L ist dann der Gefahrenmelder 9 an die bzw. an der Melderleitung ML angeschaltet. Dadurch kann für einen Batteriewechsel die Anschlussbasis AB aufgeschwenkt werden, ohne dass der Gefahrenmelder 9 abgenommen werden muss und ohne dass eine entsprechende Fehlermeldung durch das Entfernen des Gefahrenmelders 9 von der Anschlussbasis AB durch die Gefahrenmeldeanlage generiert wird. Der gezeigte Gefahrenmelder 9 ist beispielhaft ein Rauchmelder.

FIG 5 zeigt ein Gehäuse 1 mit einer zum Teil aufgeschwenkten Anschlussbasis AB und mit einem daran angebrachten funkbasierten Gefahrenmelder 9 gemäss der Erfindung. Im Unterschied zur vorherigen Ausführungsform ist der Gefahrenmelder 9 zumindest mittelbar über eine Funkverbindung mit einer übergeordneten Gefahrenmeldezentrale einer Gefahrenmeldeanlage verbunden. Zur autarken Energieversorgung weist dieser Gefahrenmelder 9 eigene Batterien 90 auf. Die leitungsgebundene Melderleitung ML kann daher entfallen. Zur Überwachung des funkbasierten Gefahrenmelders 9 auf ein Entfernen von der Anschlussbasis AB hin weist dieser gemäss der Erfindung einen Überwachungskontakt SU auf. Der Überwachungskontakt SU wird mittels eines Betätigungsmittels 25 an der Anschlussbasis AB zum Schliessen oder Öffnen nur dann betätigt, wenn der Gefahrenmelder 9 in einer für den ordnungsgemässen Betrieb des Gefahrenmelders 9 vorgesehenen Endstellung an der Anschlussbasis AB aufgenommen ist. Der Überwachungskontakt SU kann z.B. ein elektrischer Kontakt sein, der mechanisch betätigt wird. Der Überwachungskontakt SU kann alternativ ein Hallsensor oder Reed-Relais sein, der oder das durch einen Magneten an der Anschlussbasis AB als Betätigungsmittel 25 betätigt wird. Anderenfalls sendet der funkbasierte Gefahrenmelder 9 eine entsprechende Fehlermeldung an die Gefahrenmeldezentrale. Der gezeigte funkbasierte Gefahrenmelder 9 ist beispielhaft ein funkbasierter Rauchmelder. Er kann alternativ auch ein funkgestützter optischer und/oder akustischer Alarmgeber sein, wie z.B. eine Alarmblitzleuchte oder ein sogenannter Sounder.

Im Beispiel der FIG 5 ist die Haltevorrichtung H durch Schnapper oder Rastelemente realisiert, die derart im Aufnahmeraum AR angeordnet und ausgeformt sind, dass eine aufgenommene Batterie 4 mit etwas Kraftaufwand aus der Haltevorrichtung H herausgezogen werden kann und auf umgekehrten Wege wieder dort eingeschnappt werden kann.

Alternativ können die lösbare Haltevorrichtung H und das Anschluss-/Kontaktierungselement 5 derart ausgestaltet sein, dass der anzubringende Energiespeicher 4 durch eine Drehbewegung um eine Achse senkrecht zur Montagefläche im Sinne eines Bajonettverschlusses in der Haltevorrichtung H befestigbar ist und dass die Batteriekontakte 41 des Energiespeichers 4 in der befestigten Enddrehstellung des Energiespeichers 4 in der Haltevorrichtung H mit den Batteriegegenkontakten 51 des Anschluss-/Kontaktierungselements 5 kontaktieren.

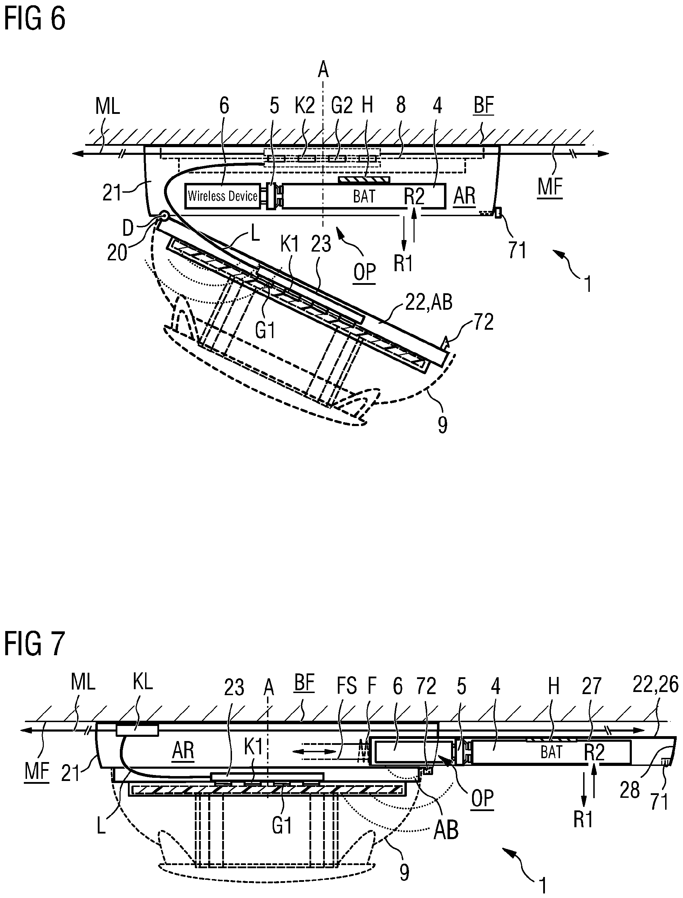

FIG 6 zeigt einen an der Melderlinie ML angeschlossenen Meldersockel 2 mit einem daran angebrachten Gehäuse 1 gemäss der Erfindung und mit einer zum Teil aufgeschwenkten Anschlussbasis AB mit einem daran angebrachten Gefahrenmelder 9. Im Vergleich zur FIG 4 ist der Grundkörper 21 zur lösbaren Anbringung des Gehäuses 1 an dem Meldersockel 2 als Montagefläche MF ausgebildet. Der Meldersockel 2 ist zur Befestigung an der Decke ausgebildet sowie zum Anschliessen an der Melderleitung ML vorgesehen. Er umfasst dabei zweite elektrische Kontakte K2. Der Grundkörper 21 weist zweite elektrische Gegenkontakte G2 auf, welche derart angeordnet sind, dass diese mit den zweiten elektrischen Kontakten K2 nach lösbarer Anbringung des Gehäuses 1 am Meldersockel 2 kontaktieren.

Vorzugsweise sind die ersten und zweiten elektrischen Kontakte K1, K2 wie auch die ersten und zweiten elektrischen Gegenkontakte G1, G2 insbesondere konstruktiv und geometrisch gleich ausgeführt. Dadurch kann im Rahmen einer Nachrüstung ein bereits auf einem Meldersockel 2 aufgenommener Gefahrenmelder 9 abgenommen werden und dieser nach lösbarer Anbringung des Gehäuses 1 auf dem Meldersockel 2 wieder lösbar an dem Gehäuse 1 angebracht werden. Dabei wird die Melderleitung ML über die zweiten Kontakte K2, G2, weiter über die durchgeschleifte flexible Leitung L und schliesslich über die ersten Kontakte K1, G1 mit dem aufgenommenen Gefahrenmelder 9 elektrisch verbunden.

FIG 7 zeigt ein weiteres Gehäuse 1 mit einer ausfahrbaren Schublade 26 als ein relativ zum Grundkörper 21 beweglich angebrachtes Verschlussteil 22 zur lösbaren Aufnahme des Energiespeichers 4 gemäss der Erfindung. Die Schublade 26 ist parallel zur Montagefläche MF bzw. zur Befestigungsfläche BF des Gehäuses 1 verschiebbar angeordnet. Die Schublade 26 umfasst eine Schubplatte 27 mit einem Frontteil 28. Letzteres verschliesst den Grundkörper 21 im eingeschobenen Zustand der Schublade 26. Dagegen gibt das Frontteil 28 die Zugangsöffnung OP zum Aufnahmeraum AR im ausgefahrenen Zustand der Schublade 26 frei. Zudem weist die Schubplatte 27 eine Haltevorrichtung H auf, die zur lösbaren Anbringung der Batterie 4 im ausgefahrenen Zustand der Schublade 26 eingerichtet ist, wie z.B. wieder mittels eines Klettverschlusses. Die Schublade 26 ist in ihrer Bauhöhe derart bemessen, dass die zum Austausch an der Schubplatte 27 angebrachte Batterie 4 wieder in den Grundkörper 21 des Gehäuses 1 eingeschoben werden kann. Die Entnahme und das Anbringen der Batterie 4 vom und an der Haltevorrichtung H erfolgt wieder in einer ersten Richtung R1 weg von Montagefläche MF und in einer Gegenrichtung R2 hin zur Montagefläche MF.

Die Schublade 26 kann mittels Führungsschienen FS im Gehäuse 1 verschiebbar gelagert sein. Mit F ist ein Federelement, wie z.B. eine Zylinderfeder, bezeichnet, die beim Einschieben der Schublade 26 in das Gehäuse 1 vorgespannt wird. Die Schublade 26 und das Federelement F sind zusammen mit einer Verriegelungsmechanik 71, 72 zwischen Schublade 26 und Grundkörper 21 derart aufeinander abgestimmt, dass die Schublade 26 im eingeschobenen Zustand bei nun einem seitlichen Druck auf die Frontplatte 28 im Sinne einer Push-Push-Mechanik entriegelt wird und durch das vorgespannte Federelement F aus dem Gehäuse 1 herausfährt. Nach dem Batteriewechsel kann die Schublade 26 wiederum durch seitlichen Druck in das Gehäuse 1 und gegen das Federelement F eingefahren werden, bis die Schublade 26 im eingefahrenen Zustand und insbesondere leicht darüber hinaus im Gehäuse 1 wieder dort verriegelt. Das Push-Push-Prinzip ist z.B. von Kugelschreibern bekannt.

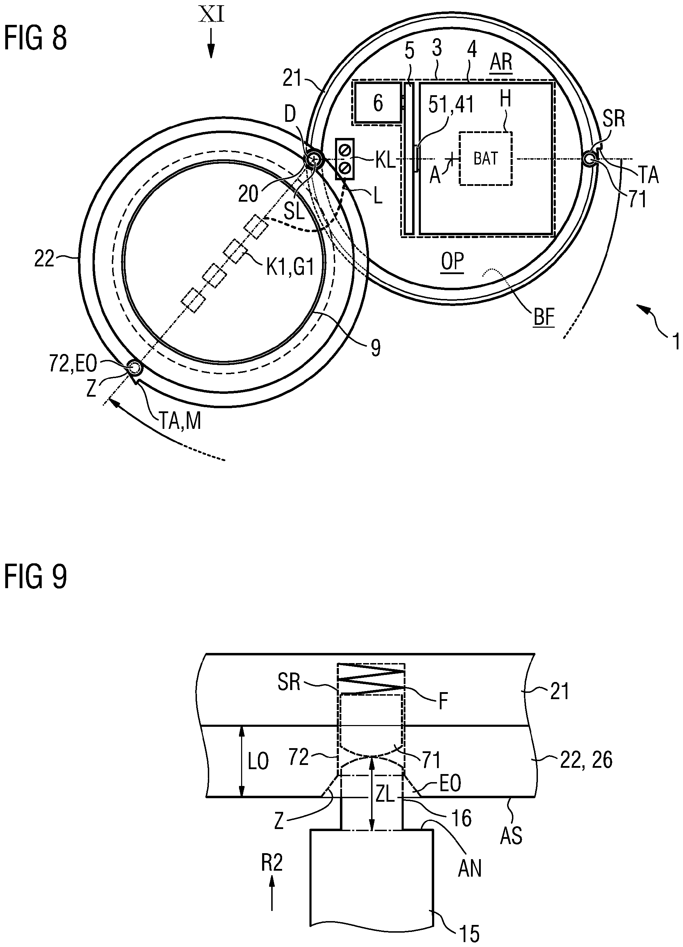

FIG 8 zeigt in einer Draufsicht ein weiteres Beispiel für ein Gehäuse 1 mit einer Anschlussbasis AB, die gemäss der Erfindung schwenkbar um eine senkrecht zur Decke MF bzw. Befestigungsfläche BF verlaufende Schwenkachse D ist. Es ist an der Anschlussbasis AB wiederum ein Gefahrenmelder 9 angebracht. Zum möglichen Aufschwenken der Anschlussbasis AB ist im zugehörigen Gelenk 20 bzw. Scharnier eine mit der Schwenkachse D fluchtende Einführöffnung SL in Form eines Sacklochs als Drehmomentstütze vorhanden. An dem entfernten, im Bezug auf die Schwenkachse D radial gegenüberliegenden Ende der Anschlussbasis AB ist in einem Hebelabstand eine durchgängige Entriegelungsöffnung EO vorgesehen, die sich gleichfalls senkrecht zur Decke MF bzw. zur Befestigungsfläche BF erstreckt. Mit Z ist eine zentrische Erweiterung der Entriegelungsöffnung EO bezeichnet, um ein Einführen eines entsprechenden Werkzeugs zu erleichtern. Der Entriegelungsmechanismus 71, 72 zum Entriegeln einer verriegelten Anschlussbasis AB sowie zum Wiederverriegeln dieser mit dem Grundkörper 21 selbst ist in der folgenden FIG 9 im Detail erläutert.

Darüber hinaus weist der der Grundkörper 21 einen tangentialen Anschlag TA auf, an dem das Verschlussteil 22 bzw. die Anschlussbasis AB im verschlossenen Zustand des Aufnahmeraums AR (definiert) anliegt. Die Anschlussbasis AB verriegelt dann bei Erreichen des tangentialen Anschlags TA und insbesondere nach Entfernen eines entsprechenden Entriegelungswerkzeugs 11 wieder selbsttätig mit dem Grundkörper 21. Der Anschlag TA dient zudem z.B. als farbige Markierung M.

FIG 9 zeigt ein Beispiel für einen Verriegelungs- und Entriegelungsmechanismus 71, 72 für ein erfindungsgemässes Gehäuse 1 mittels eines ersten Werkzeugs 11 gemäss der Erfindung. Die gezeigte Schnittdarstellung verläuft durch den Grundkörper 21 und durch das Verschlussteil 22 bzw. durch die Anschlussbasis AB bei verschlossenem Aufnahmeraum AR hindurch. Wie die FIG 9 zeigt, liegen sich im verschlossenen Zustand der Anschlussbasis AB die Entriegelungsöffnung EO und ein Sackloch SR für einen Riegel 71 im Grundkörper 21 direkt gegenüber. Dies wird durch den zuvor beschriebenen tangentialen Endanschlag TA erreicht. In der Entriegelungsöffnung EO ist eine weitere Feder F eingeschoben, dies sich zum einen gegen einen nicht weiter bezeichneten Boden der Entriegelungsöffnung EO abstützt und zum anderen einem als Bolzen ausgebildeten Riegel 71 gegenüberliegt. In die Entriegelungsöffnung EO greift ein erster Zapfen 15 eines ersten Werkzeugs 11 ein, dessen Zapfenlänge ZL mit der Länge LO der Entriegelungsöffnung EO übereinstimmt. Hierzu bildet der erste Zapfen 15 einen Anschlag AN aus. Ist der erste Zapfen 15 vollständig in der Entriegelungsöffnung EO eingeführt, so wird der bolzenförmige Riegel 71 in das Riegel-Sackloch SR gegen die weitere Feder F2 gedrückt. In dieser Position ragt der Riegel 71 nun nicht mehr in das Verschlussteil 22 bzw. in die Aufnahmebasis AB und somit nicht mehr in die Entriegelungsöffnung EO als feststehendes Gegenstück 72 zum Riegel 71 hinein. Das Verschlussteil 22 kann nun mittels des ersten Zapfens 15 in Richtung der gezeigten Bildebene und weg vom tangentialen Anschlag TA bewegt werden. Der Riegel 72 und die weitere Feder F2 sind vorzugsweise gegen ein Herausfallen aus dem Riegel-Sackloch SR gesichert. Die sich direkt gegenüberliegenden Enden des ersten Zapfens 15 sowie des Riegels 71 sind wie gezeigt vorzugsweise ballig ausgeführt, um ein Wiederverriegeln des Verschlussteils 22 mit dem Grundkörper 21 z.B. nach einem Batteriewechsel zu ermöglichen. Wird nun im geschlossenen Zustand wieder der erste Zapfen 15 aus der Entriegelungsöffnung EO herausgezogen, so schnappt der Riegel 71 aufgrund der Federvorspannung wieder in Entriegelungsöffnung EO zum Verriegeln des Grundkörpers 21 mit der Anschlussbasis AB bzw. mit dem Verschlussteil 22 hinein.

FIG 10 zeigt ein Beispiel für ein erstes Werkzeug 11 gemäss der Erfindung zum Entriegeln, Aufschwenken und Verschliessen eines erfindungsgemässen Gehäuses 1. Das gezeigte erste Werkzeug 11 umfasst eine vorzugsweise teleskopierbare Stange 13, eine an einem ersten Stangenende ausgebildete Entriegel- und Schwenkeinrichtung 14 in Form eines Bügels sowie einen an einem gegenüberliegenden zweiten Stangenenden ausgebildeten Haltebereich GR in Form eines Griffs. An der Entriegel- und Schwenkeinrichtung 14 sind ein erster und zweiter, vorzugsweise identisch ausgeformte Zapfen 15, 16 vorhanden. Die beiden Zapfen 15, 16 sind derart zueinander beabstandet und ausgestaltet, dass sie sowohl in eine Entriegelungsöffnung EO als auch in eine Einführöffnung SL eines an der Montagefläche MF aufgenommenen erfindungsgemässen Gehäuses 1 eingreifen können. Durch die Bügelform der Entriegel- und Schwenkeinrichtung 14 ist ein am Gehäuse 1 angebrachtes elektrisches Gerät 9, wie z.B. hier der Rauchmelder, sozusagen "nicht im Weg". Es ist zwischen dem ersten und zweiten Stangenende für das Aufschwenken und Verschliessen des Gehäuses 1 eine Vorrichtung 17 zum Einbringen eines Drehmoments auf die Stange 13 vorhanden. Die Vorrichtung 17 kann wie im Beispiel gezeigt ein Griff oder ein weg von der Stange 13 zeigender Arm sein.

FIG 11 zeigt ein Beispiel für ein zweites Werkzeug 12 gemäss der Erfindung zum Entnehmen und zum Einsetzen eines an einer Haltevorrichtung H eines erfindungsgemässen Gehäuses 1 lösbar angebrachten Energiespeichers 4 im Sinne eines sogenannten Prüfpflückers. Das zweite Werkzeug 12 weist wiederum eine vorzugsweise teleskopierbare Stange 13 auf. Es weist zudem einen an einem ersten Stangenende ausgebildeten Greifer 18 sowie eine an einem gegenüberliegenden zweiten Stangenende ausgebildeten Haltebereich GR in Form eines Griffs auf. Der Greifer 18 kann dabei wahlweise zum Öffnen und Schliessen ausgebildet sein. Dies kann z.B. durch einen am Haltebereich GR ausgebildeten Druckknopf DK realisiert sein, der über eine mechanische oder elektrische Wirkverbindung den Greifer 18 öffnet, um den Energiespeicher 4 nach dem Anbringen des Energiespeichers 4 an der Haltevorrichtung H des erfindungsgemässen Gehäuses 1 freizugeben. Im umgekehrten Fall kann der Greifer 18 schliessend, d.h. greifend angesteuert werden, um den auszutauschen Energiespeicher 4 vorzugsweise formschlüssig zu umgreifen und diesen weg von der Haltevorrichtung H zu entnehmen. Mit dem Bezugszeichen 19 ist eine Auffangvorrichtung zu sehen, wie z.B. ein Netz, um ein Herunterfallen des zu entnehmenden Energiespeichers 4 zu verhindern.

Die beiden Werkzeuge 11, 12 können natürlich auch durch ein kombiniertes Werkzeug 10 ersetzt werden.

Weiterhin können beide Werkzeuge 11, 12 z.B. durch eine fernsteuerbare oder durch eine autonom fliegende Drohne ersetzt werden, die eine Entriegel- und Schwenkeinrichtung 14 des ersten Werkzeugs 11 und/oder einen Greifer 18 des zweiten Werkzeugs 12 aufweist.

### Bezugszeichenliste

- 1: Gehäuse
- 2: Montageplatte
- 3: Funkmodul inklusive Energiespeicher
- 4: Batterie, Batterieblock, Akkumulator
- 5: Anschluss-/Kontaktierungselement, Steckplatz
- 6: elektronisches Modul, Funkmodul, Aktor, Sensor
- 7: Verriegelungsmechanismus
- 8: Meldersockel
- 9: elektrisches Gerät, Gefahrenmelder, Rauchmelder, optisches/akustisches Alarmierungsgerät
- 10: Werkzeug, kombiniertes Werkzeug
- 11: erstes Werkzeug
- 12: zweites Werkzeug
- 13: Stange, Teleskopstange
- 14: Entriegel- und Schwenkeinrichtung, Bügel
- 15: Zapfen, Einführzapfen
- 16: Zapfen, Entriegelungszapfen
- 17: Vorrichtung, Drehmomentvorrichtung, Arm
- 18: Greifer, Pflücker
- 19: Auffangvorrichtung, Netz, transparente Schale
- 20: Scharnier, Gelenk, Schwenkgelenk
- 21: Grundkörper
- 22: Verschlussteil, Gehäusedeckel, Aufnahmeboden
- 23: Leiterplatte
- 25: Betätigungsmittel, Stift, Steg, Magnet
- 26: Schublade
- 27: Schubplatte
- 28: Frontteil
- 41: Batteriekontakte
- 51: Batteriegegenkontakte
- 52: Anschlusselement, Anschlussbuchse
- 61: Anschlusskontakte, Anschlussstifte
- 71: Riegel
- 72: Gegenstück, feststehendes Gegenstück
- 90: Batterie für Funkrauchmelder
- A: Symmetrieachse des Gehäuses, Symmetrieachse des Alarmierungsgeräts, konstruktive Hauptachse
- AB: Anschlussbasis
- AN: Zapfenanschlag, Anschlag
- AR: Aufnahmeraum
- AS: Aussenseite des Verschlussteils
- BF: Befestigungsfläche
- D: Schwenkachse, Drehachse, Schwenkpunkt
- DK: Betätigungselement, Druckknopf
- EO: Entriegelungsöffnung
- F, F2: Federelement, Zylinderfeder
- FS: Führungsschiene
- G1: erste Gegenkontakte, Kontaktierungsflächen
- G2: zweite Gegenkontakte
- GR: Griff, Haltegriff
- H: Haltevorrichtung
- H1: gehäuseseitiges Teil der Haltevorrichtung
- H2: energiespeicherseitiges Teil der Haltevorrichtung
- K1: erste elektrische Kontakte, Kontaktierungsflächen
- K2: zweite elektrische Kontakte
- KL: Anschlussklemme
- L: durchgeschleifte Melderleitung
- LO: Länge der Entriegelungsöffnung, Lochlänge
- M: Markierung
- MF: Montagefläche, Decke, Wand
- ML: externe Leitung, Melderleitung, Melderbus
- OF: Eintrittsöffnung zum Aufnahmeraum
- OP: Zugangsöffnung
- R1: Richtung weg von der Montagefläche
- R2: Gegenrichtung, Richtung hin zur Montagefläche
- SL: Einführöffnung, Sackloch
- SR: Sackloch für Riegel
- SU: Überwachungskontakt
- TA: Tangentialer Anschlag
- Z: Zentrierung
- ZL: Zapfenlänge

## Patentansprüche

1. Gehäuse mit einem im Gehäuseinneren ausgeformten Aufnahmeraum (AR) zur Aufnahme eines elektronischen Moduls (6) sowie eines zur Stromversorgung damit verbundenen Energiespeichers (4), wobei das Gehäuse (1) einen Grundkörper (21) sowie ein relativ dazu beweglich angebrachtes Verschlussteil (22, 26) aufweist, wobei der Grundkörper (21) zur insbesondere lösbaren Anbringung an einer Montagefläche (MF), insbesondere an einer Decke, ausgebildet ist, wobei das Verschlussteil (22, 26) zum Verschliessen des Aufnahmeraums (AR) vorgesehen ist und derart ausgebildet ist, dass es im geöffneten Zustand eine Zugangsöffnung (OP) zu dem Aufnahmeraum (AR) freigibt, um ein Entnehmen des Energiespeichers (4) sowie ein Einsetzen eines zum Austausch vorgesehenen Energiespeichers (4) über die Zugangsöffnung (OP) zu ermöglichen, wobei das Gehäuse (1) eine Haltevorrichtung (H) zum lösbaren Anbringen des Energiespeichers (4) an der Haltevorrichtung (H) aufweist, und wobei die Haltevorrichtung (H) derart ausgebildet ist, dass der Energiespeicher (4) in einer Richtung (R1) weg von der Montagefläche (MF) von der Haltevorrichtung (H) entnehmbar und in einer Gegenrichtung (R2) hin zur Montagefläche (MF) an der Haltevorrichtung (H) anbringbar ist.

2. Gehäuse nach Anspruch 1, wobei das relativ zum Grundkörper (21) beweglich angebrachte Verschlussteil (22) über ein Gelenk (20) mit dem Grundkörper (21) verbunden ist, sodass das Verschlussteil (22) um eine parallel oder senkrecht zur Montagefläche (MF) verlaufende Schwenkachse (D) des Gelenks (20) schwenkbar ist, um die Zugangsöffnung (OP) zu dem Aufnahmeraum (AR) freizugeben.

3. Gehäuse nach Anspruch 1, wobei das relativ zum Grundkörper (21) des Gehäuses (1) beweglich angebrachte Verschlussteil (22) eine im Grundkörper (21) parallel zur Montagefläche (MF) verschiebbar angeordnete Schublade (26) ist, wobei die Schublade (26) eine Schubplatte (27) mit einem Frontteil (28) aufweist, wobei das Frontteil (28) den Grundkörper (21) im eingeschobenen Zustand der Schublade (26) verschliesst und wobei das Frontteil (28) die Zugangsöffnung (OP) zum Aufnahmeraum (AR) im ausgefahrenen Zustand freigibt, wobei die Schubplatte (27) die Haltevorrichtung (H) aufweist, wobei die Haltevorrichtung (H) zur lösbaren Anbringung des Energiespeichers (4) im ausgefahrenen Zustand der Schublade (26) eingerichtet ist, und wobei die Schublade (26) in ihrer Bauhöhe derart bemessen ist, dass der zum Austausch an der Schubplatte (27) angebrachte Energiespeicher (4) in den Grundkörper (21) des Gehäuses (1) eingeschoben werden kann.

4. Gehäuse nach Anspruch 2 oder 3, wobei der Grundkörper (21) an seinem der Montagefläche (MF) gegenüberliegenden Ende eine Anschlussbasis (AB) zur Anbringung eines elektrischen Geräts (9) ausbildet, wobei die Anschlussbasis (AB) integraler Teil des Grundkörpers (21) oder des beweglich am Grundkörper (21) angebrachten Verschlussteils (22) ist.

5. Gehäuse nach Anspruch 4, wobei der Grundkörper (21) an seinem der Montagefläche (MF) gegenüberliegenden Ende eine Anschlussbasis (AB) zur lösbaren Anbringung eines elektrisches Geräts (9) ausbildet, wobei das elektrische Gerät (9) insbesondere ein Gefahrenmelder, vorzugsweise ein Rauchmelder oder ein optischer und/oder akustischer Alarmgeber ist.

6. Gehäuse nach Anspruch 5, wobei die Anschlussbasis (AB) ein Betätigungsmittel (25) aufweist, wobei das Betätigungsmittel (25) derart ausgestaltet ist, dass es einen Überwachungskontakt (SU) eines an der Anschlussbasis (AB) lösbar aufgenommenen Gefahrenmelders (9) nur dann betätigt, wenn dieser in einer für den ordnungsgemässen Betrieb des Gefahrenmelders (9) vorgesehenen Endstellung aufgenommen ist.

7. Gehäuse nach einem der vorherigen Ansprüche 4 bis 6, wobei das Gehäuse (1) einen elektrischen Anschluss (KL) zum Anschliessen an eine externe Leitung, insbesondere an einer Melderleitung (ML), aufweist, wobei die Anschlussbasis (AB) erste elektrische Kontakte (K1) aufweist, die über eine im Gehäuse (1) angeordnete, insbesondere flexible Verbindungsleitung (L) mit dem elektrischen Anschluss (KL) verbunden sind, wobei die ersten elektrischen Kontakte (K1) derart angeordnet sind, dass diese mit ersten elektrischen Gegenkontakten (G1) eines an der Anschlussbasis (AB) aufgenommenen elektrischen Geräts (9), insbesondere mit ersten elektrischen Gegenkontakten (G1) eines lösbar aufgenommenen Gefahrenmelders (9), kontaktieren.

8. Gehäuse nach einem der Ansprüche 5 oder 6, wobei die im Grundkörper (21) ausgebildete Anschlussbasis (AB) erste elektrische Kontakte (K1) aufweist, welche derart angeordnet sind, dass diese mit ersten elektrischen Gegenkontakten (G1) eines an der Anschlussbasis (AB) lösbar aufgenommenen Gefahrenmelders (9) kontaktieren, wobei der Grundkörper (21) zur lösbaren Anbringung des Gehäuses (1) an einem Meldersockel (8) als Montagefläche (MF) ausgebildet ist, wobei der Meldersockel (8) zur Befestigung insbesondere an einer Decke ausgebildet ist sowie zum Anschliessen an einer Melderleitung (ML) vorgesehen ist und zweite elektrische Kontakte (K2) aufweist, und wobei der Grundkörper (21) zweite elektrische Gegenkontakte (G2) aufweist, welche derart angeordnet sind, dass diese mit den zweiten elektrischen Kontakten (K2) nach lösbarer Anbringung des Gehäuses (1) am Meldersockel (8) kontaktieren.

9. Gehäuse nach einem der vorherigen Ansprüche, wobei der Energiespeicher (4) sowie das elektronische Modul (6) eine gemeinsame Baueinheit (3) zum Einsetzen sowie zum Austausch über die Zugangsöffnung (OP) bilden und wobei der Energiespeicher (4) zur elektrischen Versorgung des elektronischen Moduls (6) elektrisch mit diesem verbunden ist.

10. Gehäuse nach einem der vorherigen Ansprüche,
- wobei das Verschlussteil (22, 26) einen bewegbaren Riegel (71) umfasst, der mit einem feststehenden Gegenstück (72) des Grundkörpers (21) derart mechanisch zusammenwirkt, dass das Verschlussteil (22, 26) mit dem Verschliessen des Aufnahmeraums (AR) mit dem Grundkörper (21) verriegelt, oder
- wobei der Grundkörper (21) einen bewegbaren Riegel (71) umfasst, der mit einem feststehenden Gegenstück (72) des Verschlussteils (22, 26) derart mechanisch zusammenwirkt, dass das Verschlussteil (22, 26) mit dem Verschliessen des Aufnahmeraums (AR) mit dem Grundkörper (21) verriegelt.

11. Gehäuse nach Anspruch 10, wobei das Verschlussteil (22, 26) eine derart an seiner Aussenseite (AS) ausgestaltete Entriegelungsöffnung (EO) aufweist, dass ein geometrisch darauf abgestimmtes Entriegelungswerkzeug (11) insbesondere in einer Richtung (R2) hin zur Montagefläche (MF) in die Entriegelungsöffnung (EO) einführbar ist, um das Verschlussteil (22, 26) mit dem verriegelten Grundkörper (21) zum Wiederöffnen des Aufnahmeraums (AR) zu entriegeln.

12. Gehäuse nach Anspruch 11, wobei das relativ zum Grundkörper (21) beweglich angebrachte Verschlussteil (22) über ein Gelenk (20) mit dem Grundkörper (21) verbunden ist, sodass das Verschlussteil (22) um eine senkrecht zur Montagefläche verlaufende Schwenkachse (D) des Gelenks (2) schwenkbar ist, um die Zugangsöffnung (OP) zu dem Aufnahmeraum (AR) freizugeben, und wobei das Verschlussteil (22) eine derart an seiner Aussenseite (AS) ausgestaltete, mit der Schwenkachse (D) fluchtende Einführöffnung (SL) als Schwenklager aufweist, dass ein geometrisch darauf abgestimmtes Aufschwenkwerkzeug (11) insbesondere in einer Richtung (R2) hin zur Montagefläche (MF) in die Einführöffnung (EO) einführbar ist.

13. Gehäuse nach Anspruch 12, wobei der Grundkörper (21) einen tangentialen Anschlag (TA) aufweist, an dem das Verschlussteil (22) im verschlossenen Zustand des Aufnahmeraums (AR) anliegt, und wobei das Verschlussteil (22) bei Erreichen des tangentialen Anschlags (TA) und insbesondere nach Entfernen des Entriegelungswerkzeugs (11) wieder selbsttätig mit dem Grundkörper (21) verriegelt.

14. Erstes Werkzeug zum Entriegeln, Aufschwenken und Verschliessen eines Gehäuses (1) nach Anspruch 12 oder 13, wobei das erste Werkzeug (11) eine vorzugsweise teleskopierbare Stange (13), eine an einem ersten Stangenende ausgebildete Entriegel- und Schwenkeinrichtung (14) sowie einen an einem gegenüberliegenden zweiten Stangenenden ausgebildeten Haltebereich (GR) aufweist, wobei die Entriegel- und Schwenkeinrichtung (14) ein erstes und zweites Ende mit einem dort ausgebildeten ersten und zweiten Zapfen (15, 16) aufweist, wobei die beiden Zapfen (15, 16) derart zueinander beabstandet und ausgestaltet sind, dass sie sowohl in eine Entriegelungsöffnung (EO) als auch in eine Einführöffnung (SL) eines an der Montagefläche (MF) aufgenommenen Gehäuses (1) eingreifen können, und wobei zwischen dem ersten und zweiten Stangenende eine Vorrichtung (17) zum Einbringen eines Drehmoments auf die Stange (13) für das Aufschwenken und für das Verschliessen des Gehäuses (1) vorhanden ist.

15. Zweites Werkzeug zum Entnehmen eines an einer Haltevorrichtung (H) lösbar angebrachten Energiespeichers (4) und zum Einsetzen eines zum Austausch vorgesehenen Energiespeichers (4) über eine Zugangsöffnung (OP) eines im geöffneten Zustand an einer Montagefläche (MF) aufgenommenen Gehäuses (1) nach einem der Ansprüche 1 bis 13, wobei das zweite Werkzeug (12) eine vorzugsweise teleskopierbare Stange (13), einen an einem ersten Stangenende ausgebildeten Greifer (18) sowie eine an einem gegenüberliegenden zweiten Stangenende ausgebildeten Haltebereich (GR) aufweist, wobei der Greifer (18) insbesondere zum wahlweise Öffnen und Schliessen ausgebildet ist.
